# EUROPÄISCHE PATENTSCHRIFT

(11) **EP 2 138 362 B1**
(45) Veröffentlichungstag und Bekanntmachung des Hinweises auf die Patenterteilung: **12.01.2011**
(21) Anmeldenummer: 09007380.0
(22) Anmeldetag: 04.06.2009
(51) Int. Cl.: B60R 21/34, B62D 25/12

(54) **Scharniereinrichtung für eine Frontklappe eines Kraftfahrzeugs mit einer Aufschlagschutzeinrichtung und/oder Fußgängerschutzeinrichtung**
Articulating device for a front flap of a motor vehicle with an impact protection device and/or pedestrian protection device
Dispositif de charnière pour un clapet frontal d'un véhicule automobile doté d'un dispositif de protection contre la collision et/ou dispositif de protection des piétons

(30) Priorität: 25.06.2008 DE 102008030220
(43) Veröffentlichungstag der Anmeldung: 30.12.2009
(73) Patentinhaber: Bayerische Motoren Werke Aktiengesellschaft, 80809 München (DE)
(72) Erfinder: Köstler, Ulrich, 85241 Hebertshausen (DE); Drexl, Thomas, 80801 München (DE)

(56) Entgegenhaltungen:
- DE-A1-102005 022 924
- DE-A1-102007 033 325

## Beschreibung

Die Erfindung betrifft eine Scharniereinrichtung für eine Frontklappe eines Kraftfahrzeugs mit einer Aufschlagschutzeinrichtung und/oder Fußgängerschutzeinrichtung, mit den im Oberbegriff des Patentanspruches 1 angegebenen Merkmalen.

Eine derartige Scharniereinrichtung weist in der DE 10 2007 033 325 A1 ein gegenüber der Karosserie des Kraftfahrzeugs schwenkbares unteres Scharnierteil und ein mit der Frontklappe des Kraftfahrzeugs verbundenes oberes Scharnierteil auf, die über eine Verbindungsachse schwenkbar verbunden und normal über einen Scherbolzen zueinander fixiert sind. Bei einem unfallbedingt eingetretenen oder bevorstehenden Aufprall auf die Frontklappe bewirkt eine Stelleinrichtung an dem oberen Scharnierteil oder an der Frontklappe eine den Scherbolzen abscherende Kraft sowie danach ein Anheben zumindest ein Bereiches der Frontklappe in Richtung einer Schutzlage, in der eine Federungs- und/oder Dämpfungseinrichtung den Aufprall abfedern und/oder dämpfen kann. Um ein Abscheren des Scherbolzens zu erreichen, ist die Stelleinrichtung entsprechend kräftig zu dimensionieren. Durch den Kraftangriff der Stelleinrichtung an dem oberen Scharnierteil bzw. an der Frontklappe ist es erforderlich, dass die Stelleinrichtung ein mit dem oberen Scharnierteil bzw. der Frontklappe zusammen wirkendes Stellelement aufweist, das einen der Anlenkstelle des Stellelements an der Frontklappe bzw. an dem oberen Scharnierteil entsprechenden Verstellweg ausführt. Bei dem durch die Stelleinrichtung bewirkten Verstellen der Frontklappe in die Schutzlage, bei dem das von dem unteren Scharnierteil gelöste obere Scharnierteil gegenüber dem unteren Scharnierteil um die Verbindungsachse schwenkt, ist von der Stelleinrichtung eine gegenüber dem Abscheren des Scherbolzens wesentlich geringere Kraft aufzubringen. Dies führt dazu, dass die Stelleinrichtung beim Anheben der Frontklappe in die Schutzlage sehr unterschiedlich belastet und auf Grund der erforderlichen Auslegung des Stellantriebs auf die beim Abscheren des Scherbolzens wirkende maximale Belastung beim Anheben der Frontklappe in die Schutzlage überdimensioniert ist. Die Baulänge der Stelleinrichtung ist im Wesentlichen durch den Verstellweg des Stellelements bestimmt und schränkt den verfügbaren Bauraum für andere Bauteile entsprechend ein.

Die DE 10 2005 022 924 A1 sieht eine Scharniereinrichtung insbesondere für eine Frontklappe eines Kraftfahrzeugs mit zwei schwenkbar verbundenen Scharnierteilen vor, von denen ein Scharnierteil über zwei ein Viergelenk bildende Schwenkhebel gegenüber der Karosserie des Kraftfahrzeugs verstellbar ist. Das andere Scharnierteil ist mit der Frontklappe verbunden. Die beiden Scharnierteile sind normal über eine Verriegelungseinrichtung mit einer Sperrklinke zueinander verriegelt. Ein Aktuator kann bei einem unfallbedingten Aufprall auf die Frontklappe die Sperrklinke über einen schwenkbaren Klinkenauslöser entriegeln und im Zusammenwirken mit einem Schwenkhebel des Viergelenks die Frontklappe in Richtung ihrer Schutzlage Weg untersetzt und damit Kraft übersetzt anheben. Die Sperrklinke dürfte die beiden Scharnierteile nicht spielfrei zueinander fixieren, so dass die Scharnierteile im normalen Fahrbetrieb eventuell geräuschvoll störende Bewegungen ausführen dürften.

Der Erfindung liegt die Aufgabe zu Grunde, eine Scharniereinrichtung mit den Merkmalen im Oberbegriff des Patentanspruches 1 anzugeben, die einen geringeren Bauraum erfordert und beim Anheben der Frontklappe in die Schutzlage gleichmäßiger beansprucht ist.

Diese Aufgabe ist durch die Merkmale im Patentanspruch 1 gelöst. Vorteilhafte Ausgestaltungen der Erfindung sind den Unteransprüchen entnehmbar.

Die erfindungsgemäße Scharniereinrichtung für eine Frontklappe eines Kraftfahrzeugs mit einer Aufschlagschutzeinrichtung und/oder Fußgängerschutzeinrichtung weist ein unteres Scharnierteil auf, das einerseits um eine reelle oder virtuelle ortsfeste oder ortsveränderliche Schwenkachse gegenüber der Karosserie des Kraftfahrzeugs schwenkbar ist und andererseits um eine Verbindungsachse schwenkbar mit einem an der Frontklappe befestigten oberen Scharnierteil verbunden ist. In einer Normallage sind das untere und obere Scharnierteil in einem Abstand von der Verbindungsachse über einen Scherbolzen verbunden, der in eine Öffnung im unteren Scharnierteil und in eine zur Öffnung fluchtende Aufnahmeöffnung im oberen Scharnierteil eingreift. Die Stelleinrichtung weist ein Stellelement auf, das bei einem unfallbedingt eingetretenen oder bevorstehenden Aufprall auf die Frontklappe von der Stelleinrichtung verstellt an dem oberen Scharnierteil oder an der Frontklappe eine den Scherbolzen abscherende Kraft und anschließend ein Anheben zumindest eines Bereiches der Frontklappe in Richtung der Schutzlage der Frontklappe bewirkt. Hierzu wirkt das Stellelement lediglich etwa bis zum Abscheren des Scherbolzens oder etwas darüber hinaus mit der Frontklappe oder mit dem oberen Scharnierteil zusammen. Sofort oder mehr oder weniger kurz nach dem Abscheren des Bolzens kommt das Stellelement der Stelleinrichtung an dem unteren Scharnierteil zur Anlage und bewirkt nachfolgend nun mit dem unteren Scharnierteil zusammen wirkend hubübersetzt ein Anheben zumindest eines Bereiches der Frontklappe in Richtung der angehobenen Schutzlage. Ein vorgespanntes Federteil kann dabei Kraft unterstützend wirken oder in einem letzten Verstellbereich ohne die Stelleinrichtung zumindest einen betreffenden Bereich der Frontklappe in die Schutzlage anheben. Das Stellelement der Stelleinrichtung führt nach dem Abscheren des Scherbolzens einen gegenüber dem Höhenverstellweg der beim Abscheren des Scherbolzens wirksamen Kraftangriffsstelle des Stellelements an der Frontklappe bzw. an dem oberen Scharnierteil wesentlich geringeren Verstellweg aus, der dem Verstellweg der Kraftangriffsstelle des Stellelements an dem unteren Scharnierteil entspricht. Auf diesem geringeren Verstellweg der Kraftangriffsstelle des Stellelements an dem unteren Scharnierteil ist das Stellelement entsprechend der Weguntersetzung kraftübersetzt und damit stärker beansprucht, so dass sich insgesamt beim Anheben der Frontklappe in die Schutzlage eine gleichmäßigere Beanspruchung des Stellelements ergibt. Durch den geringeren Verstellweg des Stellelements ist die Baugröße der Stelleinrichtung entsprechend vermindert, wodurch die Stelleinrichtung eine Anordnung anderer Bauteile nicht oder weniger einschränkt.

Ein Ausführungsbeispiel der Erfindung wird anhand einer Zeichnung näher erläutert. Es zeigen
- Fig. 1: eine perspektivische Ansicht von der in einer hochgestellten Lage befindli- chen Schamiereinrichtung, die der Schutzlage der Frontklappe entspricht,
- Fig. 2: eine Seitenansicht von der bei geschlossener Frontklappe in Normallage befindlichen Scharniereinrichtung und
- Fig. 3: eine Seitenansicht von der in Fig. 1 dargestellten Schamiereinrichtung.

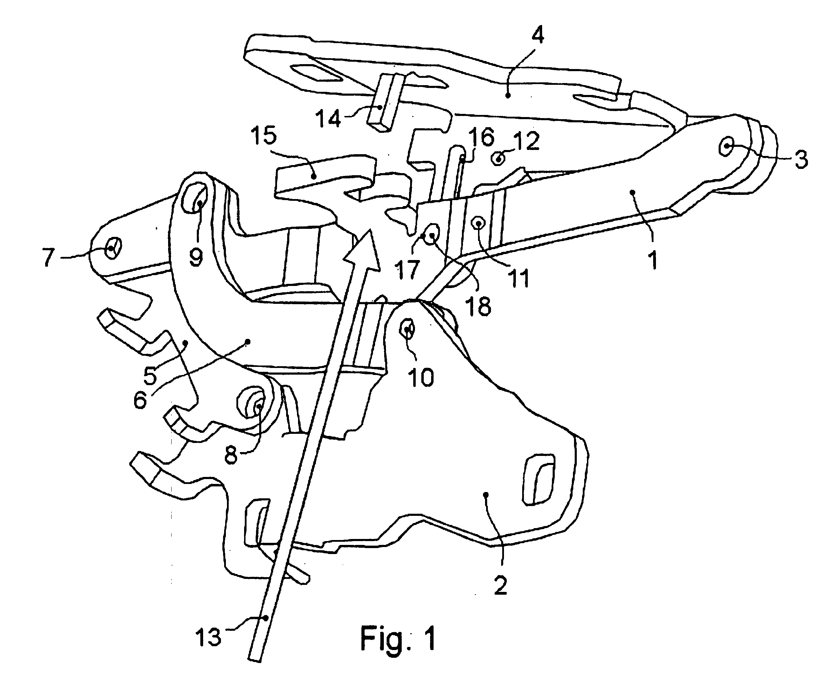

Die in Figur 1 dargestellte Scharniereinrichtung ist zur verstellbaren Abstützung eines hinteren seitlichen Bereiches einer Frontklappe eines Kraftfahrzeugs vorgesehen und weist hierzu ein unteres Scharnierteil 1 auf. Dieses Scharnierteil 1 ist einerseits um eine virtuelle ortsveränderliche Schwenkachse gegenüber der Karosserie des Kraftfahrzeugs bzw. einer daran angeordneten Konsole 2 schwenkbar und andererseits um eine Verbindungsachse 3 schwenkbar mit einem an der Frontklappe befestigten oberen Scharnierteil 4 verbunden. Die virtuelle ortsveränderliche Querachse ist bei dem Ausführungsbeispiel durch zwei ungleich lange Schwenkhebel 5, 6 gebildet, die mit dem unteren Scharnierteil 1 als Koppelelement ein Viergelenk bilden, bei dem die Schwenkhebel 5, 6 jeweils um eine Achse 7, 8 bzw. 9, 10 schwenkbar einerseits an unterschiedlichen Stellen an der Karosserie des Kraftfahrzeugs oder an einer daran befestigten Konsole 2 und andererseits an unterschiedlichen Stellen an dem unteren Scharnierteil 1 angelenkt sind. In der Schließlage der Frontklappe, in der sich das obere und untere Scharnierteil 1, 4 in der Normallage befinden, sind die Schwenkhebel 5, 6 von ihren karosserieseitigen Anlenkstellen 8, 10 nach hinten oben gerichtet, wobei der obere Schwenkhebel 6 länger als der untere Schwenkhebel 5 ausgebildet ist. In dieser Normallage kragt bzw. steht das untere Scharnierteil 1 über die Anlenkstellen 7, 9 der Schwenkhebel 5, 6 an dem unteren Scharnierteil 1 hinaus nach vorne hervor und weist an diesem vorderen Bereich die Verbindungsachse 3 auf, an der das obere Scharnierteil 4 schwenkbar angelenkt ist. Sämtliche Achsen 3, 7 bis 10 verlaufen in Fahrzeugquerrichtung. Das obere Scharnierteil 4 erstreckt sich im Wesentlichen von der Verbindungsachse 3 nach hinten.

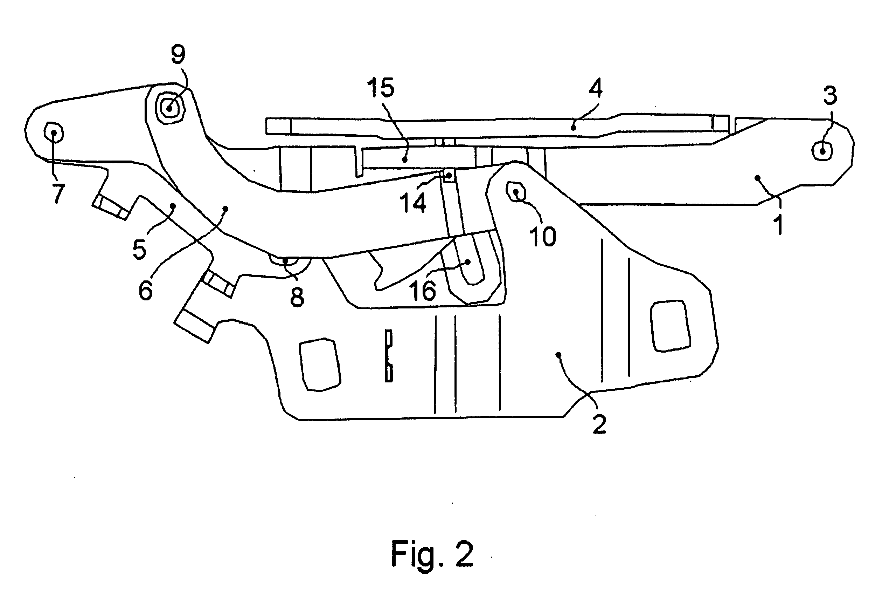

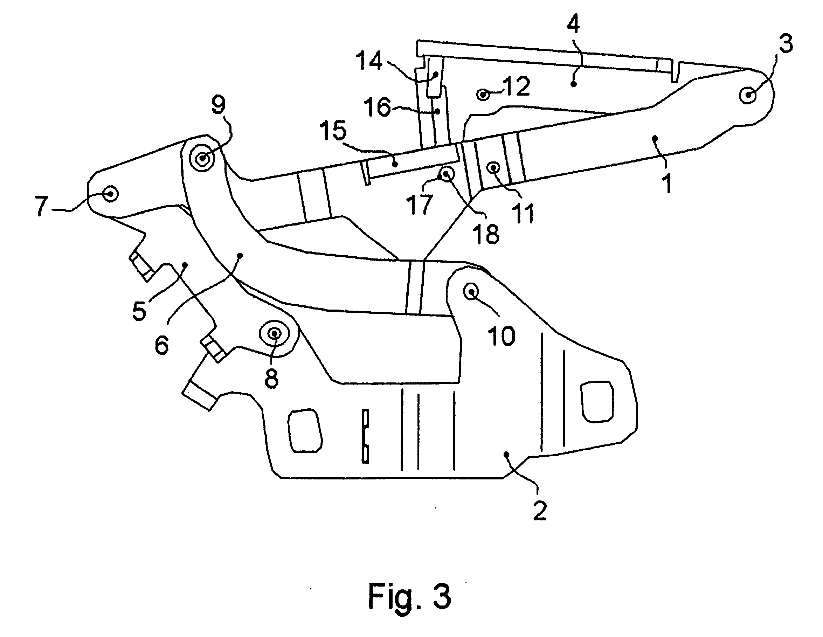

In der Fig. 2 entsprechenden Normallage der beiden Scharnierteile 5, 6 sind das untere 1 und obere Scharnierteil 4 in einem Abstand hinter der Verbindungsachse 3 über einen nicht dargestellten Scherbolzen verbunden, der in eine in den Figuren 1 und 3 erkennbare Öffnung im unteren Scharnierteil 1 und in eine zur Öffnung 11 fluchtende und in den Figuren 1 und 3 ebenfalls erkennbare Aufnahmeöffnung 12 im oberen Scharnierteil 4 eingreift. Die in Fig. 2 geschlossene Frontklappe ist an ihrem vorderen Bereich von wenigstens einem Schloss verriegelt. Nach dem Öffnen des wenigstens einen Schlosses, kann die Frontklappe um die von den beiden Schwenkhebeln 5, 6 im hinteren Bereich der Frontklappe gebildete virtuelle ortsveränderliche Schwenkachse nach oben und eventuell etwas nach hinten geschwenkt werden, wobei das obere und untere Scharnierteil 1, 4 über den nicht dargestellten Scherbolzen jeweils in ihrer Normallage zueinander verbunden bleiben.

Die Scharniereinrichtung weist eine in Fig. 1 lediglich durch einen langen Pfeil angedeutete Stelleinrichtung 13 mit einem nicht dargestellten Stellelement auf, das bei einem unfallbedingt eingetretenen oder bevorstehenden Aufprall auf die Frontklappe, der beispielsweise von wenigstens einem Sensor erfasst ist, an einem von der Unterseite des oberen Scharnierteiles 4 nach unten vorstehenden Vorsprung 14 eine den Scherbolzen abscherende Kraft und anschließend ein Anheben des hinteren Bereiches der Frontklappe in Richtung der in den Figuren 1 und 3 dargestellten Lage bewirkt, in der sich die mit dem oberen Scharnierteil 4 verbundene Frontklappe in ihrer Schutzlage befindet. Der vordere Bereich der Frontklappe bleibt dabei von dem wenigstens einen, in den Figuren nicht dargestellten Schloss verriegelt und kann beispielsweise lediglich um einen von einer Drehfalle hintergriffenen Schließbolzen geschwenkt werden, wobei die Drehfalle von einer Sperrklinke verriegelt ist. Das Stellelement 13 der Stelleinrichtung ist bei dem Ausführungsbeispiel eine Kolbenstange eines Aktuators 13, die in einem Zylinder des Aktuators 13 axial verstellbar angeordnet ist und mit einem von dem Zylinder hervor stehenden Bereich oder Kopfbereich die den Scherbolzen abscherende Kraft an der Frontklappe bzw. an dem oberen Scharnierteil 4 bzw. an dem von der Unterseite des oberen Scharnierteiles 4 nach unten vorstehenden Vorsprung 14 bewirkt.

Von dem Bereich bzw. Kopfbereich des durch eine Kolbenstange gebildeten Stellelements der Stelleinrichtung 13 axial entfernt ist an dem Stellelement eine nicht dargestellte Anschlagfläche ausgebildet, die sofort oder nach einem geringen Anheben des unteren Scharnierteiles 1 in Richtung der in den Figuren 1 und 3 dargestellten Lage nach dem Abscheren des Scherbolzens an einer durch einen gabelförmigen Stützarm 15 des unteren Scharnierteiles 1 gebildeten Gegenanschlagfläche zur Anlage kommt und mit der Gegenanschlagfläche zusammen wirkend ein Anheben des unteren Scharnierteiles 1 in Richtung der in den Figuren 1 und 3 dargestellten Lage bewirkt, in der sich die mit dem oberen Scharnierteil 4 verbundene Frontklappe in ihrer Schutzlage befindet. Die letzte Verstellbewegung des hinteren Bereiches der Frontklappe in die Schutzlage kann von einem vorgespannten Federteil unterstützt oder ohne eine wesentliche Mitwirkung der Stelleinrichtung bewirkt werden.

Die ebene oder eventuell gekrümmte Anschlagfläche der Kolbenstange und/oder die ebene oder eventuell gekrümmte Gegenanschlagfläche 15 des unteren Scharnierteiles 4 können zumindest in dem Bereich, in dem die Anschlagfläche mit der Gegenanschalfläche zusammen wirkt, eine solche Neigung aufweisen, dass die von dem Aktuator 13 über die Anschlagfläche und die Gegenanschlagfläche 15 übertragene Kraft im Wesentlichen in Achsrichtung des Aktuators 13 verläuft.

In der Schließlage und Schutzlage der Frontklappe sowie dazwischen ist der vordere Bereich der Frontklappe von dem wenigstens einen Schloss derart festgehalten, dass der hintere Bereich der Frontklappe im Wesentlichen in Höhenrichtung derart verstellbar ist, dass der hintere Bereich der Frontklappe zwischen der Schließlage und Schutzlage der Frontklappe verstellt bzw. die Frontklappe entsprechend etwas geschwenkt werden kann. In der Schutzlage der Frontklappe kann eine nicht dargestellte Aufschlagschutzeinrichtung und/oder Fußgängerschutzeinrichtung einen unfallbedingten Aufprall auf die Frontklappe abfedem und/oder dämpfen.

Der Schwenkwinkelbereich des oberen Scharnierteiles 4 gegenüber dem unteren Scharnierteil 1 ist bei dem Ausführungsbeispiel in zumindest einer Schwenkrichtung um die Verbindungsachse 3 über eine Zapfen-/Langlochführung begrenzt, wobei in den Figuren 1 bis 3 das um die Verbindungsachse gekrümmte Langloch der Zapfen-/Langlochführung und in den Figuren 1 und 3 der in einer Zapfenaufnahme 17 im unteren Scharnierteil 1 angeordnete Zapfen 18 der Zapfen-/Langlochverbindung erkennbar sind.

Die Erfindung kann von dem einzigen Ausführungsbeispiel abweichend realisiert werden. Das untere Scharnierteil kann um eine reelle oder virtuelle ortsfeste oder ortsveränderliche Schwenkachse gegenüber der Karosserie des Kraftfahrzeugs oder einem daran abgestützten bzw. befestigten Bauteil, beispielsweise eine Konsole, schwenkbar angeordnet sein. Dabei kann die reelle oder virtuelle ortsfeste oder ortsveränderliche Schwenkachse auf sehr unterschiedliche, zumindest einem Fachmann bekannte Weise realisiert sein. Die Verbindungsachse, an der das untere Scharnierteil mit dem oberen Scharnierteil schwenkbar verbunden ist, kann an einer beliebigen Stelle der Scharnierteile vorgesehen sein, bei der sich beispielsweise das obere Scharnierteil zumindest bereichsweise von der Verbindungsachse nach vorne erstreckt. Beim Verstellen der Frontklappe in die Schutzlage kommt das Stellelement der Stelleinrichtung vorzugsweise sofort oder schon bald nach dem Abscheren des Scherbolzens an dem unteren Scharnierteil zur Anlage, um insgesamt auf einem möglichst kurzen Hub des Stellelements der Stelleinrichtung eine vollständige oder zumindest teilweise Verlagerung der Frontklappe in Richtung ihrer angehobenen Schutzlage zu bewirken. Ein kurzer Hub des Stellelements ermöglicht eine geringe Baugröße der Stelleinrichtung, wodurch der für andere Bauteile erforderliche Bauraum nicht oder weniger eingeschränkt ist. Falls das Stellelement der Stelleinrichtung lediglich eine teilweise Verlagerung der Frontklappe in die Schutzlage bewirkt, ist ein weiteres Element, beispielsweise wenigstens ein vorgespanntes Federelement vorzusehen, das dann aus der von dem Stellelement erreichten, in Richtung der Schutzlage angehobenen Lage der Frontklappe eine vollständige Verlagerung der Frontklappe in die Schutzlage bewirkt. Falls die Scharniereinrichtung oder ein die Frontklappe in ihrer Schließlage verriegelndes Schloss in einem Seitenbereich der Frontklappe vorgesehen ist, befindet sich normal auf der seitlich gegenüber liegenden Seite der Frontklappe ein vorzugsweise mit der Scharniereinrichtung bzw. dem Schloss identisches oder vergleichbares Bauteil, so dass vorzugsweise symmetrische Verhältnisse zu einer vertikalen Fahrzeuglängsebene vorliegen. Die Scharniereinrichtung kann im vorderen oder hinteren, eventuell seitlichen Bereich der Frontklappe angeordnet sein. Ist die geschlossene Frontklappe beispielsweise von wenigstens einem vorderen, eventuell seitlichen Schloss zu verriegeln oder zumindest in einer Richtung, beispielsweise vertikal, zu fixieren, so kann beim Hochstellen der Frontklappe über die Stelleinrichtung bzw. gegebenenfalls den Aktuator in die Schutzlage die Frontklappe im Bereich des Schlosses von dem Schloss verriegelt bzw. fixiert bleiben. Ein Hochstellen der Frontklappe in die Schutzlage erfolgt in diesem Fall im Wesentlichen in einem von dem Schloss entfernten Bereich der Frontklappe. Ebenso kann beim Hochstellen in die Schutzlage der vordere und hintere Bereich der Frontklappe hochgestellt werden.

## Patentansprüche

1. Scharniereinrichtung für eine Frontklappe eines Kraftfahrzeugs, mit einem unteren Scharnierteil (1), das einerseits um eine reelle oder virtuelle ortsfeste oder ortsveränderliche Schwenkachse gegenüber der Karosserie (2) des Kraftfahrzeugs schwenkbar ist und andererseits um eine Verbindungsachse (3) schwenkbar mit einem an der Frontklappe befestigten oberen Scharnierteil (4) verbunden ist, und in einer Normallage das untere und obere Scharnierteil (1, 4) in einem Abstand von der Verbindungsachse (3) über einen Scherbolzen verbunden sind, der in eine Öffnung (11) im unteren Scharnierteil (1) und in eine zur Öffnung (11) fluchtende Aufnahmeöffnung (12) im oberen Scharnierteil (4) eingreift, mit einer Stelleinrichtung (13), die bei einem unfallbedingt eingetretenen oder bevorstehenden Aufprall auf die Frontklappe an dem oberen Scharnierteil (4) oder an der Frontklappe eine den Scherbolzen abscherende Kraft und anschließend ein Anheben zumindest eines Bereiches der Frontklappe in Richtung einer Schutzlage bewirkt, **dadurch gekennzeichnet, dass** nach dem Abscheren des Scherbolzens ein von der Stelleinrichtung (13) verstellbares Stellelement an dem unteren Scharnierteil (1) zur Anlage kommt und nachfolgend zumindest in einem Verstellbereich mit dem unteren Scharnierteil (1) zusammen wirkend die Frontklappe in Richtung ihrer angehobenen Schutzlage verstellt.

2. Scharniereinrichtung nach Anspruch 1, **dadurch gekennzeichnet, dass** das Stellelement der Stelleinrichtung (13) die den Scherbolzen abscherende Kraft bewirkt.

3. Scharniereinrichtung nach Anspruch 1 oder 2, **dadurch gekennzeichnet, dass** das Stellelement der Stelleinrichtung (13) eine Kolbenstange eines Aktuators ist, die in einem Zylinder des Aktuators axial verstellbar angeordnet ist und mit einem von dem Zylinder hervor stehenden Bereich oder Kopfbereich die den Scherbolzen abscherende Kraft an der Frontklappe bzw. an dem oberen Scharnierteil (4) bewirkt.

4. Scharniereinrichtung nach einem der Ansprüche 1 bis 3, **dadurch gekennzeichnet, dass** das Stellelement der Stelleinrichtung (13) bzw. gegebenenfalls der Bereich bzw. Kopfbereich der Kolbenstange mit einem von der Frontklappe oder von dem oberen Scharnierteil (4) nach unten vorstehenden Vorsprung (14) zusammen wirkend die den Scherbolzen abscherende Kraft an der Frontklappe bzw. an dem oberen Scharnierteil (4) bewirkt.

5. Scharniereinrichtung nach Anspruch 3 oder 4, **dadurch gekennzeichnet, dass** von dem Bereich bzw. Kopfbereich der Kolbenstange axial entfernt an der Kolbenstange eine Anschlagfläche ausgebildet ist, die nach dem Abscheren des Scherbolzens an einer Gegenanschlagfläche (15) des unteren Scharnierteils (4) zur Anlage kommt und mit der Gegenanschlagfläche (15) zusammen wirkend die Frontklappe in Richtung ihrer angehobenen Schutzlage verstellt.

6. Scharniereinrichtung nach Anspruch 5, **dadurch gekennzeichnet, dass** die ebene oder eventuell gekrümmte Anschlagfläche der Kolbenstange und/oder die ebene oder eventuell gekrümmte Gegenanschlagfläche (15) des unteren Scharnierteils (4) zumindest in dem Bereich, in dem die Anschlagfläche mit der Gegenanschalfläche zusammen wirkt, eine solche Neigung aufweist, dass die von dem Aktuator über die Anschlagfläche und die Gegenanschlagfläche (15) übertragene Kraft im Wesentlichen in Achsrichtung des Aktuators verläuft.

7. Scharniereinrichtung nach einem der Ansprüche 3 bis 6, **dadurch gekennzeichnet, dass** beim Hochstellen der Frontklappe in die Schutzlage nach dem Abscheren des Scherbolzens sofort oder nach einem geringen Anheben der Frontklappe in Richtung der Schutzlage bzw. einem geringen Schwenkwinkel des oberen Scharnierteiles (4) um die Verbindungsachse (3) gegenüber dem unteren Scharnierteil (1) die Anschlagfläche der Kolbenstange des Aktuators an der Gegenanschlagfläche (15) des unteren Scharnierteiles (1) zur Anlage kommt.

8. Scharniereinrichtung nach einem der Ansprüche 1 bis 7, **dadurch gekennzeichnet, dass** der Schwenkwinkelbereich des oberen Scharnierteiles (4) gegenüber dem unteren Scharnierteil (1) zumindest in einer Schwenkrichtung um die Verbindungsachse (3) begrenzt ist, oder zusätzlich die Begrenzung über eine Zapfen-/Langlochführung bewirkt ist, die ein um die Verbindungsachse (3) gekrümmtes Langloch (16) in einem Scharnierteil (4) aufweist, in das der von dem anderen Scharnierteil (1) abstehende Zapfen (18) der Zapfen-/Langlochführung eingreift.

9. Scharniereinrichtung nach einem der Ansprüche 1 bis 8, **dadurch gekennzeichnet, dass** die virtuelle, ortsveränderliche Schwenkachse des unteren Scharnierteiles (1) durch zwei ungleich lange Schwenkhebel (5, 6) gebildet ist, die mit dem unteren Scharnierteil (1) als Koppelelement ein Viergelenk bilden, bei dem die Schwenkhebel (5, 6) jeweils um eine Achse (7, 8 bzw. 9, 10) schwenkbar einerseits an unterschiedlichen Stellen an der Karosserie des Kraftfahrzeugs oder an einer daran befestigten Konsole (2) und andererseits an unterschiedlichen Stellen an dem unteren Scharnierteil (1) angelenkt sind.

10. Scharniereinrichtung nach einem der Ansprüche 1 bis 9, **dadurch gekennzeichnet, dass** die Scharniereinrichtung im hinteren, eventuell seitlichen Bereich der Frontklappe angeordnet ist, und die geschlossene Frontklappe von wenigstens einem vorderen, eventuell seitlichen Schloss zu verriegeln oder zumindest in einer Richtung, beispielsweise vertikal, fixiert ist und beim Hochstellen der Frontklappe über die Stelleinrichtung (13) bzw. gegebenenfalls den Aktuator in die Schutzlage von dem Schloss verriegelt bzw. fixiert bleibt.

11. Scharniereinrichtung nach Anspruch 9 oder 10, **dadurch gekennzeichnet, dass** in der Schließlage der Frontklappe, bei in der Normallage befindlichen Scharnierteilen (1, 4), die Schwenkhebel (5, 6) von ihren karosserieseitigen Anlenkstellen (8, 10) nach hinten oben gerichtet sind und/oder der obere Schwenkhebel (6) länger als der untere Schwenkhebel (5) ausgebildet ist und/oder das untere Scharnierteil (1) über die Anlenkstellen (7, 9) der Schwenkhebel (5, 6) an dem unteren Scharnierteil (1) hinaus nach vorne hervor kragt bzw. steht und/oder die Verbindungsachse (3) im vorderen Bereich des unteren Scharnierteiles (1) ausgebildet ist und/oder sich das obere Scharnierteil (4) zumindest bereichsweise von der Verbindungsachse (3) nach vorne und/oder nach hinten erstreckt.

## Claims

1. An articulating device for a bonnet of a motor vehicle, with a lower hinge part (1) which, on the one hand, can be pivoted about a real or virtual stationary or positionally variable pivot axle (3) relative to the body (2) of the motor vehicle and, on the other hand, is pivotably connected about a connecting axle to an upper hinge part (4) fastened to the bonnet and, in a normal position, the lower and upper hinge part (1, 4) are connected at a spacing from the connecting axle (3) by means of a shear bolt, which engages in an opening (11) in the lower hinge part (1) and in a receiving opening (12) aligned with the opening (11) in the upper hinge part (4), with a positioning device (13) which, in the event of an impact that is imminent or has occurred as a result of an accident on the bonnet, brings about a force shearing off the shear bolt on the upper hinge part (4) or on the bonnet and then causes at least one region of the bonnet to be raised in the direction of a protective position, **characterised in that** after the shear bolt has been sheared off, a positioning element which can be adjusted by the positioning device (13) comes to rest on the lower hinge part (1) and then, cooperating at least in one adjustment region with the lower hinge part (1), adjusts the bonnet in the direction of its raised protective position.

2. An articulating device according to claim 1, **characterised in that** the positioning element of the positioning device (13) brings about the force shearing off the shear bolt.

3. An articulating device according to claim 1 or 2, **characterised in that** the positioning element of the positioning device (13) is a piston rod of an actuator, which piston rod is axially adjustably arranged in a cylinder of the actuator, and with a region projecting from the cylinder or head region, which brings about the force shearing off the shear bolt at the bonnet or at the upper hinge part (4).

4. An articulating device according to any one of claims 1 to 3, **characterised in that** the positioning element of the positioning device (13) or optionally the region or head region of the piston rod, cooperating with a projection (14) projecting downwardly from the bonnet or from the upper hinge part (4), brings about the force shearing off the shear bolt on the bonnet or on the upper hinge part (4).

5. An articulating device according to claim 3 or 4, **characterised in that** a stop face is formed on the piston rod axially remote from the region or head region of the piston rod and, after the shear bolt has been sheared off, comes to rest on a counter-stop face (15) of the lower hinge part (4) and, cooperating with the counter-stop face (15), adjusts the bonnet in the direction of its raised protective position.

6. An articulating device according to claim 5, **characterised in that** the flat or possibly curved stop face of the piston rod and/or the flat or possibly curved counter-stop face (15) of the lower hinge part (4), at least in the region, in which the stop face cooperates with the counter-stop face, has an incline such that the force transmitted by the actuator via the stop face and the counter-stop face (!5) substantially extends in the axial direction of the actuator.

7. An articulating device according to any one of claims 3 to 6, **characterised in that** when the bonnet is raised into the protective position after the shear bolt has been sheared off, immediately or after a slight raising of the bonnet in the direction of the protective position or a slight pivoting angle of the upper hinge part (4) about the connecting axle (3) relative to the lower hinge part (1), the stop face of the piston rod of the actuator comes to rest of the counter-stop face (15) of the lower hinge part (1).

8. An articulating device according to any one of claims 1 to 7, **characterised in that** the pivoting angle range of the upper hinge part (4) relative to the lower hinge part (1) is limited at least in a pivoting direction about the connecting axle (3) or, in addition, the limitation is brought about by a journal/slot guidance, which has a slot (16) curved around the connecting axle (3) in a hinge part (4), in which the journal (18) projecting from the other hinge part (1) of the journal/slot guidance engages.

9. An articulating device according to any one of claims 1 to 8, **characterised in that** the virtual, positionally variable pivot axle of the lower hinge part (1) is formed by two pivot levers (5, 6) of unequal length which, with the lower hinge part (1) as the coupling element, form a four-joint hinge, in which the pivot levers (5, 6) are in each case pivotably articulated about an axis (7, 8 or 9, 10), on the one hand, at different points on the body of the motor vehicle or on a bracket (2) fastened thereto and, on the other hand, at different points on the lower hinge part (1).

10. An articulating device according to any one of claims 1 to 9, **characterised in that** the hinge device is arranged in the rear, possibly side region of the bonnet, and the closed bonnet is to be locked by at least one front, possibly side lock or is fixed at least in one direction, for example vertically, and when the bonnet is raised by the positioning device (13) or optionally the actuator into the protective position remains locked by the lock or fixed.

11. An articulating device according to claim 9 or 10, **characterised in that** in the closed position of the bonnet, with hinge parts (1, 4) located in the normal position, the pivot levers (5, 6) are directed to the top rear from their body-side articulating points (8, 10) and/or the upper pivot lever (6) is longer than the lower pivot lever (5) and/or the lower hinge part (1) protrudes or projects forward via the articulating points (7, 9) of the pivot lever (5, 6) at the lower hinge part (1) and/or the connecting axle (3) is formed in the front region of the lower hinge part (1) and/or the upper hinge part (4) extends, at least in regions, to the front and/or the rear from the connecting axle (3).

## Revendications

1. Dispositif de charnière de capot de véhicule automobile comprenant :
- une partie inférieure de charnière (1) qui, d'une part peut pivoter autour d'un axe de pivotement réel ou virtuel, fixe ou variable par rapport à la carrosserie (2) du véhicule et qui, d'autre part est reliée de manière pivotante autour d'un axe de liaison (3) à une partie supérieure de charnière (4) solidaire du capot et en position normale, la partie inférieure et la partie supérieure de charnière (1, 4) sont reliées à une certaine distance de l'axe de liaison (3) par un goujon de cisaillement passant dans un orifice (11) de la partie inférieure de charnière (1) et dans un orifice de réception (12) aligné sur l'orifice (11) dans la partie supérieure de charnière (4),
- une installation d'actionnement (13) qui, en cas de collision ou de collision prévisible causée par un accident, exerce sur le capot au niveau de la partie supérieure de charnière (4) ou du capot, une force de cisaillement du goujon et produit ensuite le soulèvement au moins d'une zone du capot en direction de la position de protection,
dispositif **caractérisé en ce qu'**
après le cisaillement du goujon, un élément d'actionnement déplacé par l'installation d'actionnement (13) arrive en appui contre la partie inférieure de charnière (1) et déplace ensuite le capot dans la direction de sa position de protection, relevée, au moins dans une zone d'actionnement avec la partie inférieure de charnière (1).

2. Dispositif de charnière selon la revendication 1,
**caractérisé en ce que**
l'élément d'actionnement de l'installation d'actionnement (13), produit la force de cisaillement du goujon.

3. Dispositif de charnière selon la revendication 1 ou 2,
**caractérisé en ce que**
l'élément d'actionnement de l'installation d'actionnement (13) est la tige de piston d'un actionneur mobile axialement dans le cylindre de l'actionnement et produisant avec la zone en saillie du cylindre ou la zone de tête, la force de cisaillement du goujon appliquée au capot ou à la partie supérieure de charnière (4).

4. Dispositif de charnière selon l'une des revendications 1 à 3,
**caractérisé en ce que**
l'élément d'actionnement de l'installation d'actionnement (13) ou le cas échéant la zone ou zone de tête de la tige de piston coopérant avec une partie en saillie (14) dirigée vers le bas à partir du capot ou de la partie supérieure de charnière (4), produisent en coopérant, la force de cisaillement du goujon appliquée au capot ou à la partie supérieure de charnière (4).

5. Dispositif de charnière selon la revendication 3 ou 4,
**caractérisé en ce que**
la zone ou zone de tête de la tige de piston axialement éloignée, comporte une surface d'appui sur la tige de piston qui, après cisaillement du goujon, vient en appui contre la surface d'appui opposée (15) de la partie inférieure de charnière (4) et en coopérant avec la surface d'appui opposée (15), elle déplace le capot en direction de sa position de protection, relevée.

6. Dispositif de charnière selon la revendication 5,
**caractérisé en ce que**
la surface d'appui plane ou éventuellement courbe de la tige de piston et/ou la surface d'appui opposée (15), plane ou éventuellement courbe de la partie inférieure de charnière (4), présentent une inclinaison au moins dans la zone dans laquelle la surface d'appui coopère avec la surface d'appui opposée, inclinaison telle que la force transmise par l'actionneur par l'intermédiaire de la surface d'appui et la surface d'appui opposée (15) soit principalement dirigée dans la direction axiale de l'actionneur.

7. Dispositif de charnière selon l'une des revendications 3 à 6,
**caractérisé en ce que**
lors du relèvement du capot dans la position de protection, après cisaillement du goujon, immédiatement ou après un léger soulèvement du capot en direction de la position de protection ou pour un léger angle de pivotement de la partie supérieure de charnière (4) autour de l'axe de liaison (3), par rapport à la partie inférieure de charnière (1), la surface d'appui de la tige de piston de l'actionneur vient en appui contre la surface d'appui opposée (15) de la partie inférieure de charnière (1).

8. Dispositif de charnière selon l'une des revendications 1 à 7,
**caractérisé en ce que**
la zone de l'angle de pivotement de la partie supérieure de charnière (4) par rapport à la partie inférieure de charnière (1), est limitée au moins dans la direction de pivotement autour de l'axe de liaison (3) ou en plus la limitation est assurée par un guidage par un goujon/trou oblong, comportant un trou oblong (16) courbe autour de l'axe de liaison (3) dans une partie de charnière (4) dans laquelle pénètre le goujon (18) en saillie de l'autre partie de charnière (1) et faisant partie du guidage par goujon/trou oblong.

9. Dispositif de charnière selon l'une des revendications 1 à 8,
**caractérisé en ce que**
l'axe de pivotement virtuel, d'emplacement variable de la partie inférieure de charnière (1) est réalisé par deux leviers pivotants (5, 6) de longueurs différentes, qui forment avec la partie inférieure de charnière (1) constituant l'élément de couplage, un quadrangle dont les leviers pivotants (5, 6) sont articulés de manière pivotante d'une part autour d'un axe (7, 8 ou 9, 10) en des points différents de la carrosserie du véhicule ou à une console (2) fixée à celui-ci et d'autre part, en des points différents de la partie inférieure de charnière (1).

10. Dispositif de charnière selon l'une des revendications 1 à 9,
**caractérisé en ce que**
le dispositif de charnière est prévu dans la zone arrière, éventuellement latérale du capot et le capot fermé est fixé par au moins une serrure avant, éventuellement latérale pour le verrouillage ou au moins dans une direction et lors du relevage du capot par l'installation d'actionnement (13) ou le cas échéant l'actionneur en position de protection, le verrouillage ou le blocage reste assuré par la serrure.

11. Dispositif de charnière selon la revendication 9 ou 10,
**caractérisé en ce qu'**
en position de fermeture du capot, les parties de charnière (1, 4) se trouvent en position normale, les leviers de pivotement (5, 6) étant dirigés à partir de leur point d'articulation (8, 10), côté carrosserie, vers l'arrière et vers le haut et/ou le levier pivotant supérieur (6) est plus long que le levier pivotant inférieur (5) et/ou la partie inférieure de charnière (1) est en saillie au-delà des points d'articulation (7, 9) des leviers pivotants (5, 6) à la partie inférieure de charnière (1), en dépassant vers l'avant et/ou l'axe de liaison (3) est réalisé dans la zone avant de la partie inférieure de charnière (1) et/ou la partie supérieure de charnière (4) s'étend au moins par zone à partir de l'axe de liaison (3), vers l'avant et/ou vers l'arrière.
